# EUROPÄISCHE PATENTANMELDUNG

(11) **EP 3 657 147 A1**
(43) Veröffentlichungstag der Anmeldung: **27.05.2020**
(21) Anmeldenummer: 18207445.0
(22) Anmeldetag: 21.11.2018
(51) Int. Cl.: G01L 27/00

(54) **KALIBRIERVORRICHTUNG ZUM KALIBRIEREN EINER DRUCKMESSEINRICHTUNG UND ENTSPRECHENDE VERWENDUNG DIESER KALIBRIERVORRICHTUNG**

(71) Anmelder: Bayer AG, 51373 Leverkusen (DE)
(72) Erfinder: Justen, Berthold, 42117 Wuppertal (DE); Ballnus, Andreas, 42117 Wuppertal (DE)
(74) Vertreter: BIP Patents

(57) **Zusammenfassung**

Die Erfindung betrifft eine Kalibriervorrichtung (10) zum Kalibrieren einer in oder an einer Flächenstruktur (12) angeordneten Druckmesseinrichtung (14), mit einer Haube (20) zum Ausbilden eines die Druckmesseinrichtung (14) strömungstechnisch einschließenden Druckraums (22), die zumindest einen Anschluss (28) für eine Pumpe (30) und einen Messfühler (32) aufweist, einer die Haube (20) tragenden Basisstruktur (24) und Befestigungsmitteln (36) zum lösbaren Befestigen der Basisstruktur (24) an der Flächenstruktur (12). Es ist vorgesehen, dass die Befestigungsmittel (36) als Befestigungsmittel (36) zum lösbaren Befestigen der Basisstruktur (24) unmittelbar an der von der Flächenstruktur (12) gebildeten Fläche (16) unabhängig von einer oder mehreren zusätzlichen räumlichen Strukturen in der Flächenstruktur (12) ausgebildet sind.

Die Erfindung betrifft weiterhin die Verwendung einer derartigen Kalibriervorrichtung (10) zum Kalibrieren einer in oder an einer Flächenstruktur (12) angeordneten Druckmesseinrichtung (14).

## Beschreibung

Die Erfindung betrifft eine Kalibriervorrichtung zum Kalibrieren einer in oder an einer Flächenstruktur angeordneten Druckmesseinrichtung, mit einer Haube zum Ausbilden eines die Druckmesseinrichtung strömungstechnisch einschließenden Druckraums, die zumindest einen Anschluss für eine Pumpe und einen Messfühler aufweist, einer die Haube tragenden Basisstruktur und Befestigungsmitteln zum lösbaren Befestigen der Basisstruktur an der Flächenstruktur.

Des Weiteren betrifft die Erfindung die Verwendung einer derartigen Kalibriervorrichtung.

Die Druckschrift EP 0 302 385 A2 zeigt eine Kalibriervorrichtung zum Kalibrieren einer auf einer als Bodenfläche ausgebildeten Flächenstruktur angeordneten Druckmesseinrichtung, mit einer Haube zum Ausbilden eines die Druckmesseinrichtung strömungstechnisch einschließenden Druckraums, die zumindest einen Anschluss für eine Pumpe und einen Messfühler aufweist, mit einer die Haube tragenden Basisstruktur in Form eines Befestigungsflansches und mit Befestigungsmitteln zum lösbaren Befestigen der Basisstruktur an der Flächenstruktur über räumliche Befestigungsstrukturen in der Flächenstruktur. Dabei sind Befestigungsflansch und Bodenfläche bezüglich der Befestigungsmittel auf einander abgestimmt und bilden zusammen ein Kalibriersystem.

Es gibt Anwendungen, bei denen eine Kalibriervorrichtung an Flächenstrukturen zum Einsatz kommen soll, bei denen es keine vorbekannten räumlichen Strukturen für die Befestigungsmittel gibt. Es gibt zum Beispiel "Feldanwendungen", bei denen eine entsprechende Druckmesseinrichtung in einer Anlage, etc. in einem Umfeld mit Flächenstruktur fest eingebaut ist.

So werden zum Beispiel in Einmal-Bag-Containern zur Füllstandsmessung Druckmesseinrichtungen verwendet, die im Boden des Containers eingelassen sind. Das in den Bag einfließende flüssige Medium übt einen mit der Füllstandshöhe steigenden Druck auf die Druckmesseinrichtung aus. Diese gemessene Druckkraft wird über einen Drucktransmitter umgerechnet in die Füllstandshöhe bzw. das Volumen oder das aus der Medien-Dichte resultierende Gewicht. Vor Inbetriebnahme sowie in wiederkehrenden Zeit-Abständen müssen die Funktionsfähigkeit sowie die Messgenauigkeit der Druckmesseinrichtungen kalibriert bzw. justiert werden.

Aufgabe der Erfindung ist es, Maßnahmen anzugeben, die ein Kalibrieren an einer nahezu beliebigen Flächenstruktur hinreichender Größe ermöglicht.

Die Lösung der Aufgabe erfolgt erfindungsgemäß durch die Merkmale der unabhängigen Ansprüche 1 und 10. Bevorzugte Ausgestaltungen der Erfindung sind in den Unteransprüchen angegeben, die jeweils für sich genommen oder in beliebiger Kombination miteinander einen Aspekt der Erfindung darstellen können.

Bei der erfindungsgemäßen Kalibriervorrichtung zum Kalibrieren einer in oder an einer Flächenstruktur angeordneten Druckmesseinrichtung, welche (i) eine Haube zum Ausbilden eines die Druckmesseinrichtung strömungstechnisch einschließenden Druckraums, die zumindest einen Anschluss für eine Pumpe und einen Messfühler aufweist, (ii) eine die Haube tragende Basisstruktur und (iii) Befestigungsmittel zum lösbaren Befestigen der Basisstruktur an der Flächenstruktur aufweist, ist vorgesehen, dass die Befestigungsmittel als Befestigungsmittel zum lösbaren Befestigen der Basisstruktur unmittelbar an der von der Flächenstruktur gebildeten Fläche ausgebildet sind. Mit anderen Worten ist die Basisstruktur mittels der Befestigungsmittel unabhängig von einer oder mehreren zusätzlichen räumlichen Strukturen in der Flächenstruktur lösbar an der Flächenstruktur befestigbar, wobei die Befestigung insbesondere unabhängig von einer oder mehreren zusätzlichen räumlichen Strukturen ist/sind, die die Position der Basisstruktur und/oder der Haube auf der Flächenstruktur festlegt/festlegen. Bei der entsprechenden Befestigung handelt es sich also um eine Befestigung "an der nackten Fläche", die auf einen Formschluss durch ein Ineinandergreifen von mindestens zwei Verbindungspartnern, bei dem sich diese Verbindungspartner auch ohne oder bei unterbrochener Kraftübertragung nicht lösen können, verzichtet.

Die Befestigungsmittel sind daher also Befestigungsmittel für eine Befestigung, die maßgeblich auf Kraft- und/oder Stoffschluss beruht. Denkbar ist hier die Realisierung von auf einer Anpressung oder einer lösbaren Verklebung beruhenden Befestigung durch entsprechende Befestigungsmittel.

Gemäß einer bevorzugten Ausführungsform der Kalibriervorrichtung (10) ist vorgesehen, dass die Befestigungsmittel als Saughalter, insbesondere Kipphebelsaughalter, oder sonstige auf Unterdruck basierende Befestigungsmittel ausgebildet sind. Für diese Art von Befestigungsmitteln muss die von der Flächenstruktur gebildete Fläche hinreichend glatt sein.

Gemäß einer weiteren Ausführungsform der Kalibriervorrichtung (10) ist vorgesehen, dass die Befestigungsmittel als ein oder mehrere Gewichte ausgebildet sind. Durch Auflegen dieser ein oder mehrerer Gewichte wird der Kalibrierdruck ausgeglichen. Zudem sind die ein oder mehreren Gewichte bevorzugt als Referenzgewichte ausgebildet, so dass durch Auflegen eines bestimmten Referenzgewichts bzw. einer bestimmten Kombination von Referenzgewichten stets ein bestimmter Kalibierdruck ausgeglichen wird. Für diese Art von Befestigungsmitteln muss die Kalibriervorrichtung (10) unter Ausnutzung der Schwerkraft betrieben werden. Für dem Fachmann ist mithin unmittelbar ersichtlich, dass die Kalibiervorrichtung (10) auch eine Kombination aus Befestigungsmitteln ausgebildet als ein oder mehrere Gewichte und Saughalter aufweisen kann.

Gemäß einer weiteren bevorzugten Ausführungsform der Erfindung weist die Kalibriervorrichtung ein Fenstersystem auf, durch das ein Nutzer der Kalibriervorrichtung den von der Haube abgedeckten Bereich der Flächenstruktur beobachten kann. Da die Kalibriervorrichtung weitgehend "frei" auf der Flächenstruktur positioniert und dann befestigt werden kann, muss insbesondere bei einer in der Flächenstruktur angeordneten Druckmesseinrichtung gewährleistet werden, dass der Druckraum die Druckmesseinrichtung auch tatsächlich strömungstechnisch einschließt. Mittels eines Fenstersystems, durch das der Nutzer der Kalibriervorrichtung den von der Haube abgedeckten Bereich der Flächenstruktur beobachten kann, kann dieser die Kalibriervorrichtung auf der Flächenstruktur präzise positionieren und befestigen.

Dabei ist insbesondere vorgesehen, dass die Haube zur Ausbildung des Fenstersystems zumindest in einem Bereich transparent ist. Die Haube kann also einen oder mehrere transparente Fensterbereiche aufweisen oder vollständig transparent sein.

Weiterhin ist bevorzugt vorgesehen, dass die Basisstruktur zur Ausbildung des Fenstersystems mindestens eine Aussparung aufweist. Diese gibt den Blick auf die transparente Haube bzw. die Haube mit den transparenten Bereichen frei.

Gemäß einer weiteren bevorzugten Ausführungsform der Erfindung ist die Haube auf die Flächenstruktur dicht aufsetzbar, wobei die Basisstruktur weiterhin eine Zuführeinrichtung zum Aufsetzen der Haube auf die Flächenstruktur und/oder zum Abheben der Haube von der Flächenstruktur aufweist. Die Haube weist dazu insbesondere eine Dichtung, bevorzugt eine umlaufende Dichtung, auf.

Dabei ist bevorzugt vorgesehen, dass die Zuführeinrichtung zum Aufsetzen der Haube auf die Flächenstruktur und/oder zum Abheben der Haube von der Flächenstruktur zumindest eine Anpressschraube aufweist. Die Zuführeinrichtung wirkt dabei analog zu einer Spindelpresse mit einer oder mehreren Spindeln.

Gemäß noch einer weiteren bevorzugten Ausführungsform der Erfindung weist die Kalibriervorrichtung ein Sperrelement auf, über das der Anschluss oder zumindest einer der Anschlüsse strömungstechnisch mit dem Druckraum verbindbar ist. Dabei bilden Anschluss und Sperrelement insbesondere eine Einheit. Das Sperrelement ist ein Ventil, ein Schieber, etc.

Bei einer weiteren bevorzugten Ausgestaltung der Erfindung weist die Kalibriervorrichtung die über den Anschluss strömungstechnisch mit dem Druckraum verbundene Pumpe und/oder den über den Anschluss strömungstechnisch mit dem Druckraum verbundenen Messfühler auf.

Schließlich ist bezüglich der Kalibriervorrichtung mit Vorteil vorgesehen, dass diese weiterhin zumindest einen Griff zur bequemen Positionierung oder sonstigen Handhabung der Kalibriervorrichtung durch den Nutzer aufweist. Bevorzugt weist dabei die Basisstruktur diesen zumindest einen Griff auf.

Bei der erfindungsgemäßen Verwendung einer Kalibriervorrichtung zum Kalibrieren einer in oder an einer Flächenstruktur angeordneten Druckmesseinrichtung ist vorgesehen, dass diese Kalibriervorrichtung als eine zuvor genannte Kalibriervorrichtung ausgebildet ist. Mit anderen Worten ist also ein Verfahren zum Kalibrieren einer in oder an einer Flächenstruktur angeordneten Druckmesseinrichtung vorgesehen, welches mittels der zuvor genannten Kalibriervorrichtung durchgeführt wird.

Bevorzugte Ausführungsformen der erfindungsgemäßen Verwendung bzw. des erfindungsgemäßen Verfahrens ergeben sich analog zu den vorstehend genannten Maßnahmen bezüglich der Kalibriervorrichtung.

Nachfolgend wird die Erfindung unter Bezugnahme auf die anliegenden Figuren anhand von bevorzugten Ausführungsbeispielen exemplarisch erläutert, wobei die nachfolgend dargestellten Merkmale sowohl jeweils für sich genommen als auch in Kombination miteinander einen Aspekt der Erfindung darstellen können. Es zeigen
Figur 1:eine schematische Schnittdarstellung einer Kalibriervorrichtung zum Kalibrieren einer in oder an einer Flächenstruktur angeordneten Druckmesseinrichtung gemäß einer bevorzugten Ausführungsform der Erfindung und
Figur 2:die in Figur 1 gezeigte Kalibriervorrichtung in einer konkreten Ausführungsform, jedoch in einer anderen Darstellung.

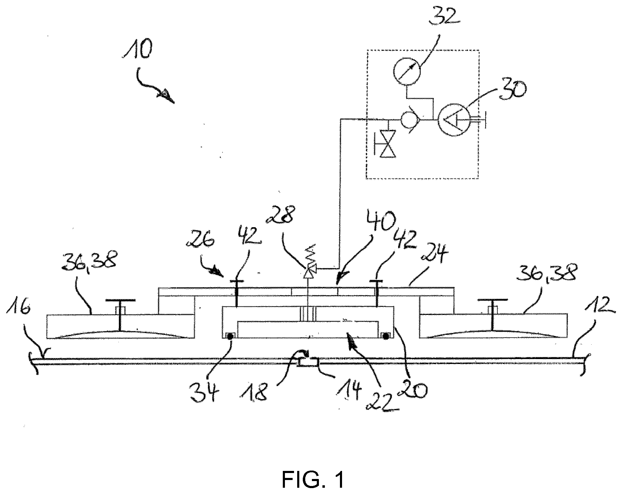

Die Figur 1 zeigt eine Kalibriervorrichtung 10 zum Kalibrieren einer in oder an einer Flächenstruktur 12 angeordneten Druckmesseinrichtung 14 sowie eine entsprechende Anordnung von Flächenstruktur 12 und Druckmesseinrichtung 14. Im vorliegenden Fall ist die Druckmesseinrichtung 14 in der Flächenstruktur 12, also hinter der von der Flächenstruktur 12 gebildeten Fläche 16 angeordnet. Ein Kanal 18 führt von der Fläche 16 zur Druckmesseinrichtung 14.

Die Kalibriervorrichtung 10 weist eine auf die Flächenstruktur 12 aufsetzbare Haube 20 zum Ausbilden eines die Druckmesseinrichtung 14 strömungstechnisch einschließenden Druckraums 22 und eine die Haube 20 tragende Basisstruktur 24 auf. Die Basisstruktur 24 weist ihrerseits eine Zuführeinrichtung 26 zum Aufsetzen der Haube 20 auf die Flächenstruktur 12 und zum Abheben der Haube 20 von der Flächenstruktur 12 bei bereits an dieser Flächenstruktur 12 befestigter Basisstruktur 24 auf. Die Haube 20 weist ihrerseits zumindest einen Anschluss 28 für eine Pumpe 30 und einen Messfühler 32 auf. Weiterhin weist die Haube 20 eine Dichtung 34 zum Abdichten des an die Flächenstruktur 12 angedrückten Druckraums 22 gegen die Umgebung auf. Die Haube 20 wird zur Bildung des Druckraums 22 mit der Dichtung 34 auf die Flächenstruktur 14 aufgesetzt. Das Volumen des Druckraums 22 wird - abgesehen von dem Kanal 18 - allein durch die Haube 20 bestimmt. Pumpe 30 und Messfühler 32 bilden eine separate Einheit. Die Pumpe 30 ist insbesondere als Handpumpe ausgebildet.

Weiterhin weist die Kalibriervorrichtung 10 Befestigungsmittel 36 zum lösbaren Befestigen der Basisstruktur 24 an der Flächenstruktur 12 auf. Die Befestigungsmittel 36 sind hier im Beispiel als Saughalter 38, genauer gesagt als Kipphebelsaughalter, ausgebildet. Für diese Art von per Unterdruck wirkenden Befestigungsmitteln 36 muss die von der Flächenstruktur 12 gebildete Fläche 16 hinreichend glatt sein.

Da die Kalibriervorrichtung 10 weitgehend "frei" auf der Flächenstruktur 12 positioniert und dann befestigt werden kann, muss insbesondere bei einer in der Flächenstruktur 12 angeordneten Druckmesseinrichtung 14 gewährleistet werden, dass der Druckraum 22 die Druckmesseinrichtung 14 auch tatsächlich strömungstechnisch einschließt. Um überprüfen zu können, ob eine richtige Positionierung vorliegt, weist die Kalibriervorrichtung 10 ein Fenstersystem 40 auf, durch das ein Nutzer der Kalibriervorrichtung 10 den von der Haube 20 abgedeckten Bereich der Flächenstruktur 12 beobachten kann.

Die Zuführeinrichtung 26 zum Aufsetzen der Haube 20 auf die Flächenstruktur 12 und zum Abheben der Haube 20 von der Flächenstruktur 12 weist mehrere Anpressschrauben 42 auf, über die die Haube 20 relativ zur Basisstruktur 24 verlagert werden kann.

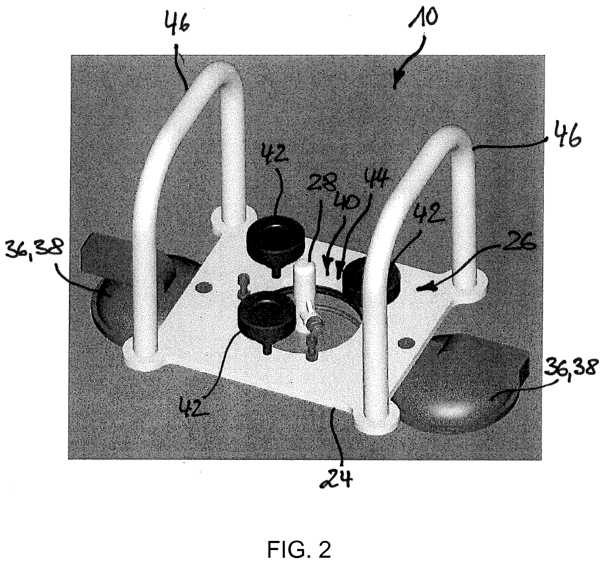

Die Figur 2 zeigt die Kalibriervorrichtung 10 in einer konkreten Ausgestaltung. Bei dieser Darstellung ist die konkrete Form und Funktion einiger der Komponenten der Kalibriervorrichtung 10 besser erkennbar, obwohl die meisten Komponenten bereits in Zusammenhang mit Figur 1 beschrieben wurden.

Die Basisstruktur 24 ist eine Grundplatte, die von den Saughaltern 38 getragen wird. In der Mitte der Grundplatte ist die als eine Art Aufhängung ausgebildete Zuführeinrichtung 26 mit den Anpressschrauben 42 erkennbar. Diese sind Umfänglich um einen Durchbruch 44 durch die als Grundplatte ausgebildete Basisstruktur 24 angeordnet. An den Enden der Anpressschrauben 42 ist die (hier nur schlecht sichtbare) Haube 20 unterhalb der Grundplatte befestigt, genauer gesagt aufgehängt. Lediglich der Anschluss 28 für die Pumpe 30 und den Messfühler 32 ist recht gut sichtbar. Der Durchbruch 44 ist Teil des Fenstersystems 40, durch das der Nutzer der Kalibriervorrichtung 10 den von der sonst transparenten Haube 20 abgedeckten Bereich der Flächenstruktur 12 beobachten kann.

Schließlich weist die Kalibriervorrichtung noch zwei Griffe 46 zur bequemen Positionierung oder sonstigen Handhabung der Kalibriervorrichtung 10 durch den Nutzer auf. Die Griffe 46 sind direkt auf der Basisstruktur 24 angeordnet und im Beispiel als Bügelgriffe ausgestaltet.

Die hier gezeigte Kalibriervorrichtung 10 ist eine mobile Kalibriervorrichtung 10, insbesondere eine tragbare Kalibriervorrichtung 10 für eine Verwendung "im Feld". Dabei ist jedwede Einbaulage der mobilen Kalibriervorrichtung 10 denkbar: am Boden, an einer Wand, über Kopf an der Decke, etc.

Im Folgenden soll nun eine Anwendung beschrieben werden, für die diese Kalibriervorrichtung 10 besonders geeignet ist.

In Einmal-Bag-Containern werden zur Füllstandsmessung Druckmesseinrichtungen 14, die im Boden des Containers eingelassen sind, verwendet. Das in den Bag einfließende flüssige Medium übt einen mit der Füllstandshöhe steigenden Druck auf die Druckmesseinrichtung 14 aus. Diese gemessene Druckkraft wird über einen Drucktransmitter umgerechnet in die Füllstandshöhe bzw. das Volumen oder das aus der Medien-Dichte resultierende Gewicht. Vor Inbetriebnahme sowie in wiederkehrenden Zeit-Abständen müssen die Funktionsfähigkeit sowie die Messgenauigkeit der Druckmesseinrichtungen 14 kalibriert bzw. justiert werden.

Mit der Kalibriervorrichtung 10 kann eine entsprechende Kalibrierung vor Ort vorgenommen werden. Dazu wird in der über der Druckmesseinrichtung 14 platzierten Haube 20 mittels der Pumpe 30 und dem Druckmessfühler 32 ein oder mehrere unterschiedliche wohldefinierte Referenzdrücke aufgebaut, die dann mit dem von der Druckmesseinrichtung 14 gemessenen Druck verglichen werden. Bei Abweichungen wird der Wert der Druckmesseinrichtung 14 entsprechend korrigiert. Die konstruktive Gestaltung des Umfeldes ermöglicht den Druckaufbau durch Abdichtung des Druckraumes 22. Die Druckmesseinrichtung 14 muss für diese Prüfung nicht demontiert werden. Dank der Zuführeinrichtung 26 kann der Prozess der Befestigung der Vorrichtung 10 an der Flächenstruktur 12 mittels der Befestigungsmittel 36 von dem Erstellen des Druckraums 22 durch Andrücken der Haube 20 getrennt werden. Die Funktion der Kalibriervorrichtung 10 stellt sich wie folgt dar:
Die transparente Haube 20 wir über der Druckmesseinrichtung 14 platziert. Befindet sie sich in der korrekten Position über der Druckmesseinrichtung 14 so werden die beiden Saugheber 38 betätigt und so die Kalibriervorrichtung 10 fixiert. Hierbei ist auf die Unterdruckanzeige an den Saughebern zu achten. Signalisieren diese kein Vakuum so ist der Vorgang zu wiederholen. Nach erfolgreicher Betätigung der Saugheber 38 wird über die drei Rändelmuttern der Anpressschrauben 42 der Anpressdruck an die Flächenstruktur 12 erhöht um eine ausreichende Abdichtung herzustellen. Nachdem dies erfolgt ist, wird mittels der Pumpe 30 der gewünschte Druck eingestellt. Nun kann die Kalibration vorgenommen werden. Im Anschluss daran ist die Pumpe 30 zu entspannen. Dann kann die Vorrichtung demontiert werden.

## Patentansprüche

1. Kalibriervorrichtung (10) zum Kalibrieren einer in oder an einer Flächenstruktur (12) angeordneten Druckmesseinrichtung (14), mit
- einer Haube (20) zum Ausbilden eines die Druckmesseinrichtung (14) strömungstechnisch einschließenden Druckraums (22), die zumindest einen Anschluss (28) für eine Pumpe (30) und einen Messfühler (32) aufweist,
- einer die Haube (20) tragenden Basisstruktur (24) und
- Befestigungsmitteln (36) zum lösbaren Befestigen der Basisstruktur (24) an der Flächenstruktur (12),
**dadurch gekennzeichnet, dass** die Befestigungsmittel (36) als Befestigungsmittel (36) zum lösbaren Befestigen der Basisstruktur (24) unmittelbar an der von der Flächenstruktur (12) gebildeten Fläche (16) unabhängig von einer oder mehreren zusätzlichen räumlichen Strukturen in der Flächenstruktur (12) ausgebildet sind.

2. Kalibriervorrichtung nach Anspruch 1, **dadurch gekennzeichnet, dass** die Befestigungsmittel (36) als Saughalter (38), insbesondere Kipphebelsaughalter, oder sonstige auf Unterdruck basierende Befestigungsmittel (36) ausgebildet sind.

3. Kalibriervorrichtung nach Anspruch 1 oder 2, **gekennzeichnet durch** ein Fenstersystem (40), durch das ein Nutzer der Kalibriervorrichtung (10) den von der Haube (20) abgedeckten Bereich der Flächenstruktur (12) beobachten kann.

4. Kalibriervorrichtung nach Anspruch 3, **dadurch gekennzeichnet, dass** die Haube (20) zur Ausbildung des Fenstersystems (40) zumindest in einem Bereich transparent ist.

5. Kalibriervorrichtung nach Anspruch 3 oder 4, **dadurch gekennzeichnet, dass** die Basisstruktur (24) zur Ausbildung des Fenstersystems (40) mindestens eine Aussparung (44) aufweist.

6. Kalibriervorrichtung nach einem der vorhergehenden Ansprüche, **dadurch gekennzeichnet, dass** die Haube (20) auf die Flächenstruktur (12) dicht aufsetzbar ist, wobei die Basisstruktur (24) weiterhin eine Zuführeinrichtung (26) zum Aufsetzen der Haube (20) auf die Flächenstruktur (12) und/oder zum Abheben der Haube (20) von der Flächenstruktur (12) aufweist.

7. Kalibriervorrichtung nach Anspruch 6, **dadurch gekennzeichnet, dass** die Zuführeinrichtung (26) zum Aufsetzen der Haube (20) auf die Flächenstruktur (12) und/oder zum Abheben der Haube (20) von der Flächenstruktur (12) zumindest eine Anpressschraube (42) aufweist.

8. Kalibriervorrichtung nach einem der vorhergehenden Ansprüche, **gekennzeichnet durch** ein Sperrelement, über das der Anschluss (28) oder zumindest einer der Anschlüsse strömungstechnisch mit dem Druckraum (28) verbindbar ist.

9. Kalibriervorrichtung nach einem der vorhergehenden Ansprüche, **gekennzeichnet durch** die über den Anschluss (28) strömungstechnisch mit dem Druckraum (22) verbundene Pumpe (30) und/oder den über den Anschluss (28) strömungstechnisch mit dem Druckraum (22) verbundenen Messfühler (32).

10. Verwendung einer nach einem der vorhergehenden Ansprüche ausgebildeten Kalibriervorrichtung (10) zum Kalibrieren einer in oder an einer Flächenstruktur (12) angeordneten Druckmesseinrichtung (14).
